# EUROPEAN PATENT APPLICATION

(11) **EP 4 610 115 A1**
(43) Date of publication of application: **03.09.2025**
(21) Application number: 24160904.9
(22) Date of filing: 01.03.2024
(51) Int. Cl.: B60R 21/0132, B60R 21/0134, B60W 30/095, B60W 50/14

(54) **A VEHICLE SAFETY SYSTEM**

(71) Applicant: Autoliv Development AB, 447 83 Vårgårda (SE)
(72) Inventor: GUSTAFSSON, Per, Vårgårda (SE); BODA, Christian-Nils, Vårgårda (SE); AHMED, Jawwad, Vårgårda (SE)
(74) Representative: Westpatent AB

(57) **Abstract**

The present disclosure relates to a vehicle safety system (101) adapted to be mounted in an ego vehicle (100) and comprising at least one motion sensor arrangement (102), adapted to detect at least one vehicle motion parameter (ω, a, v), forming motion data, and a control unit arrangement (110) adapted to determine the probability (P_{c}, 400) for a vehicle crash to occur within a certain upcoming time span (Δt) by means of collected motion data from the motion sensor arrangement (102). The control unit arrangement (110) is adapted to calculate a mean value (P_{cm}; P_{cm1}, P_{cm2}, P_{cm3}) of those determined probabilities (P_{c}, 400) that fall below a certain crash threshold (P_{ct}) during a motion data collection time span (t_{A}-t_{B}; t₀-t₁; t₁-t₂; t₂-t₃). The control unit arrangement (110) is adapted to collect motion data from the motion sensor arrangement (102), below which crash threshold (P_{ct}) a vehicle crash is determined not to occur within said upcoming time span (Δt).

## Description

The present disclosure relates to a vehicle safety system adapted to be mounted in an ego vehicle and comprising at least one motion sensor arrangement, adapted to detect at least one vehicle motion parameter, and a control unit arrangement.

Today, vehicles are provided with motion sensor arrangement, adapted to detect at least one vehicle motion parameter such as acceleration/deceleration, yaw angle, change rate of yaw angle, vehicle motion direction etc., where the data supplied by these sensor arrangements can be used to determine the probability that a vehicle crash of some kind is imminent to occur.

This probability usually has to exceed a threshold level in order to trigger safety system actions such as deployment of airbags and emergency braking.

It is therefore an object of the present disclosure to provide a vehicle safety system that is adapted to provide additional value-added functionalities to enhance rider/driver safety, apart from crash detection, while using existing devices.

Said object is achieved by means of a vehicle safety system adapted to be mounted in an ego vehicle and comprising at least one motion sensor arrangement, adapted to detect at least one vehicle motion parameter, forming motion data. The vehicle safety system further comprises a control unit arrangement adapted to determine the probability for a vehicle crash to occur within a certain upcoming time span by means of collected motion data from the motion sensor arrangement. The control unit arrangement is adapted to calculate a mean value of those determined probabilities that fall below a certain crash threshold during a motion data collection time span where the control unit arrangement is adapted to collect motion data from the motion sensor arrangement. Below the crash threshold, a vehicle crash is determined not to occur within said upcoming time span.

This means that a measure of near-crash situations during a certain motion data collection time span can be determined. As will be described later, such a measure can be used in several manners.

According to some aspects, the motion data collection time span runs during the safety system's travel path in an ego vehicle from a first position to a second position.

This means that that the motion data collection time span can run between two positions that can be predetermined or correspond to a start position where the ego vehicle starts a journey at a start time and an end position where the ego vehicle ends the journey at an end time.

According to some aspects, the motion data collection time span runs in a predetermined time window. This means that the motion data collection time span runs during a predetermined time.

According to some aspects, the motion data collection runs in a plurality of consecutive time windows, where the mean value is calculated for each time windows. In this manner, a plurality of mean values is acquired, where each mean value is associated with a corresponding time window.

It is evident that the motion data collection time span can be defined to run in many different manners, offering a high degree of versatility.

According to some aspects, the control unit arrangement is adapted to control transmission of data identifying positions related to those time windows where the calculated mean value exceeds a mean threshold value.

In this manner, data identifying positions where the severity of the near-crash situation is deemed to exceed the mean threshold value can be used over time and for a plurality of vehicles for identifying certain positions along the travel path where a crash or other type of related accident is more likely to occur.

According to some aspects, the control unit arrangement is adapted to control transmission of the calculated mean values to a remote server.

In this manner, the calculated mean values can be made available to, for example, insurance companies, traffic planners and/or to a driver's personal "driver account" where a driver can log on and check his or hers own driving performance, which can be a tool for improving one's own driving performance.

By making the calculated mean values available to insurance companies, personalized insurance fees can be set, and by making the calculated mean values available to traffic planners, finding the correct places where re-organizing, replanning and/or re-building certain roads and/or traffic installations where a crash is more likely to occur is facilitated.

For more short-term problems such as an icy road or a broken traffic light, warning messages may be issued, for example via radio such that other drivers are helped to be cautious on such road segments to avoid the occurrence of a crash and other dangerous events. Furthermore, the need of repair of for example a broken traffic light and the need for counter-acting ice on the road can be communicated and identified.

According to some aspects, the control unit arrangement is adapted to adjust the crash threshold in dependence of a plurality of calculated mean values. This means that the crash threshold can be adjusted to better conform with the real conditions.

According to some aspects, the control unit arrangement is adapted to issue an alert to a driver when an aggregated mean value of a plurality of calculated mean values exceeds a corresponding aggregated threshold. This is advantageous since the driver may not be sufficiently aware of the present conditions and should be more alert etc. such that a real crash is avoided.

According to some aspects, the issued alert as at least one of a visual alert, an auditory alert, and a haptic alert. This way, the driver can be alerted in many different ways, ensuring that the driver is made aware of that an alert condition exists.

Said object is also achieved by means of methods and vehicles that are associated with the above advantages.

### BRIEF DESCRIPTION OF THE DRAWINGS

The present disclosure will now be described more in detail with reference to the appended drawings, where:
- Figure 1: shows a schematic top view of an ego vehicle;
- Figure 2: shows a schematic top view of an ego vehicle travelling along a path;
- Figure 3: shows a schematic top view of an ego vehicle travelling along consecutive time windows;
- Figure 4A: shows a graphic representation of the probability that a vehicle crash occurs according to a first example;
- Figure 4B: shows a graphic representation of the probability that a vehicle crash occurs according to a second example;
- Figure 5: shows a graphic representation of a plurality of mean values for the probability that a vehicle crash occurs;
- Figure 6: schematically illustrates components of control unit arrangement;
- Figure 7: schematically illustrates a computer program product; and
- Figure 8: shows a flowchart for methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

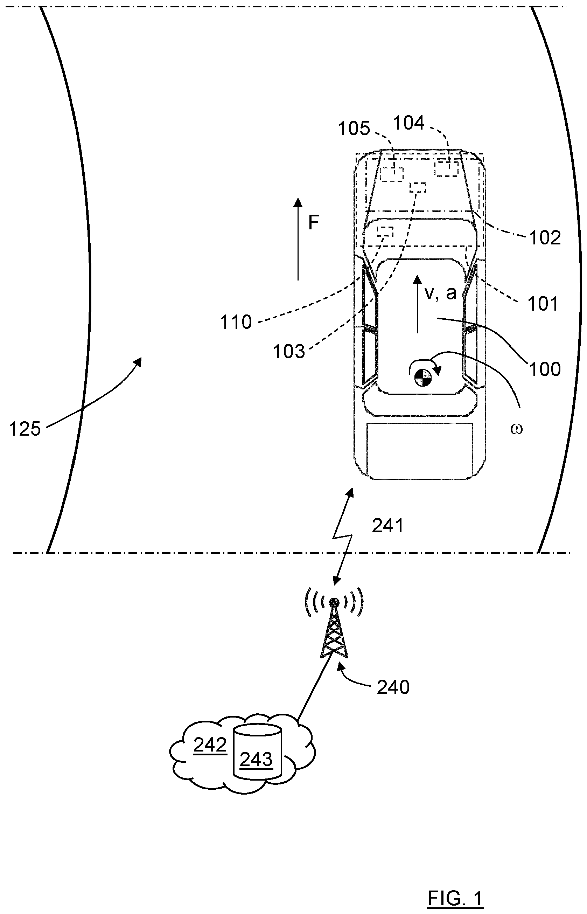

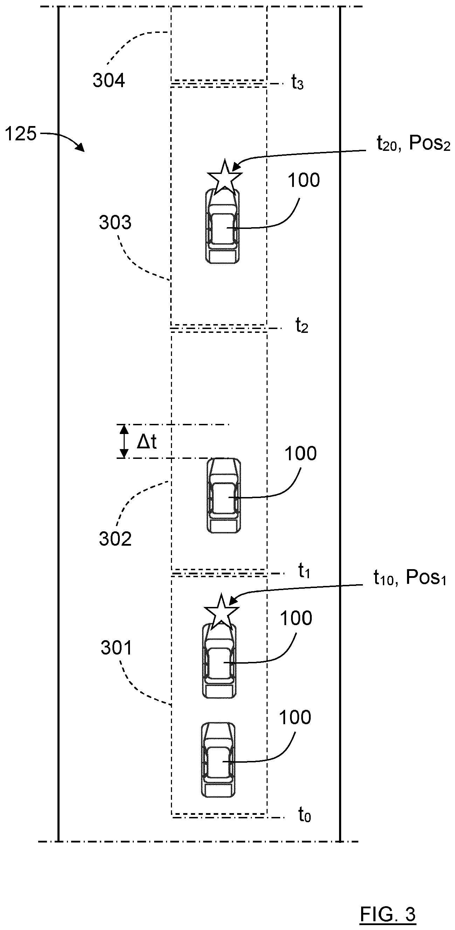

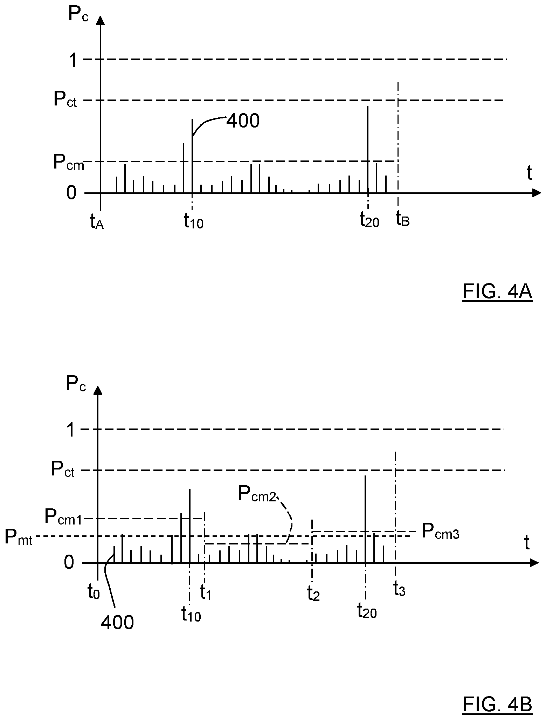

Figure 1 schematically shows a top view of an ego vehicle 100 arranged to run at an ego vehicle velocity v on a road 125 in a forward over-ground movement direction F, where the ego vehicle 100 comprises a vehicle safety system 101. The safety system 101 comprises at least one motion sensor arrangement 102, adapted to detect at least one vehicle motion parameter ω, a, v, forming motion data, and a control unit arrangement 110. Examples of vehicle motion parameters are yaw angle ω and speed of yaw angle change Δω/Δt, as well as acceleration a and velocity v. With reference also to Figure 3, Figure 4A and Figure 4B, the control unit arrangement 110 is adapted to determine the probability P_{c}, 400 for a vehicle crash to occur within a certain upcoming time span Δt by means of collected motion data from the motion sensor arrangement 102. As shown in Figure 3, the upcoming time span Δt normally occurs in an imminent future, as normal in this context.

As shown in Figure 4A and Figure 4B, the probability P_{c} is shown as function of time t, and a plurality of probabilities 400 are determined (only one indicated in each of Figure 4A and Figure 4B for reasons of clarity).

According to the present disclosure, the control unit arrangement 110 is adapted to calculate a mean value P_{cm}; P_{cm1}, P_{cm2}, P_{cm3} of those determined probabilities P_{c}, 400 that fall below a certain crash threshold P_{ct} during a motion data collection time span t_{A}-t_{B}; t₀-t₁; t₁-t₂; t₂-t₃. The control unit arrangement 110 is adapted to collect motion data from the motion sensor arrangement 102, below which crash threshold P_{ct} a vehicle crash is determined not to occur within said upcoming time span Δt.

This means that a measure of near-crash situations during a certain motion data collection time span can be determined. As will be described later, such a measure can be used in several manners.

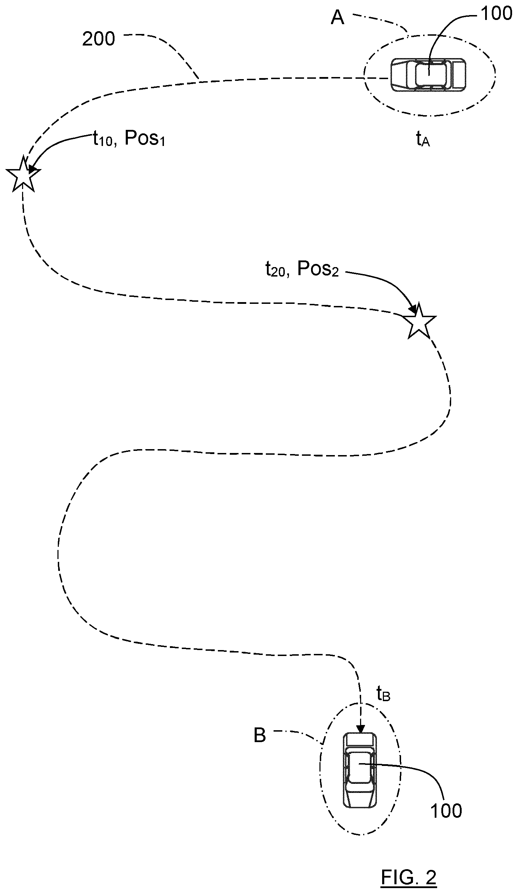

According to some aspects, with reference also to Figure 2 and in particular Figure 4A, the motion data collection time span t_{A}-t_{B} runs during the safety system's travel path 200 in an ego vehicle 100 from a first position A to a second position B. This means that that the motion data collection time span t_{A}-t_{B} runs between two positions A, B, where these positions can be predetermined or correspond to a start position A where the ego vehicle 100 starts a journey 200 at a start time t_{A} and an end position B where the ego vehicle 100 ends the journey 200 at an end time t_{B}.

This is illustrated in Figure 4A, where a plurality of probabilities 400 are determined between the start time t_{A} and the end time t_{B}, and where the mean value P_{cm} of those determined probabilities P_{c}, 400 that fall below the crash threshold P_{ct} is determined.

According to some aspects, as in particular shown in Figure 3 and Figure 4B, the motion data collection time span t₀-t₁; t₁-t₂; t₂-t₃ runs in a predetermined time window 301, 302, 303, 304. This means that the motion data collection time span runs during a predetermined time.

According to some further aspects, the motion data collection runs in a plurality of consecutive time windows 301, 302, 303, 304, where the mean value P_{cm1}, P_{cm2}, P_{cm3} is calculated for each time windows 301, 302, 303, 304. In this manner, a plurality of mean values P_{cm1}, P_{cm2}, P_{cm3} is acquired, where each mean value P_{cm1}, P_{cm2}, P_{cm3} is associated with a corresponding time window 301, 302, 303, 304. These time windows 301, 302, 303, 304 may for example run between a start time t_{A} and an end time t_{B} as illustrated in Figure 2. In the example below, Figure 2 is assumed to illustrate application of time windows 301, 302, 303, 304.

It is evident that the motion data collection time span can be defined to run in many different manners, offering a high degree of versatility.

According to some aspects, as illustrated in Figure 4B, the window length t₀-t₁; t₁-t₂; t₂-t₃ is same as a refresh interval for the mean value P_{cm1}, P_{cm2}, P_{cm3} that is updated in real-time during the journey.

According to some aspects, the control unit arrangement 110 is adapted to control transmission 241 of data identifying positions Pos₁, Pos₂ related to those time windows 301, 303 where the calculated mean value P_{cm1}, P_{cm3} exceeds a mean threshold value Pₘₜ. In this manner, data identifying positions Pos₁, Pos₂ where the severity of the near-crash situation is deemed to exceed the mean threshold value Pₘₜ can be used over time and for a plurality of vehicles for identifying certain positions Pos₁, Pos₂ along the travel path 200 where a crash or other type of related accident is more likely to occur, as illustrated in Figure 2. The geographical locations of the positions Pos₁, Pos₂ can be determined by means of for example GPS (Global Positioning System).

In the examples illustrated in Figure 2 and Figure 3, there is a first position Pos₁ where the mean threshold value Pₘₜ is exceeded at a first time t₁₀, and a second position Pos₂ where the mean threshold value Pₘₜ is exceeded at a second time t₂₀, following the first time t₁₀. These positions Pos₁, Pos₂ may for example be associated with an icy road, a sharp turn, a pothole, a broken traffic light in a high-traffic crossing etc.

According to some aspects, the control unit arrangement 110 is adapted to control transmission 241 of the calculated mean values P_{cm}; P_{cm1}, P_{cm2}, P_{cm3}; to a remote server 243. In this manner, the calculated mean values can be made available to, for example, insurance companies, traffic planners and/or to a driver's personal "driver account" where a driver can log on and check his or hers own driving performance, which can be a tool for improving one's own driving performance by analyzing behavior and actions in situations that closely resemble a crash type event that might have ended-up as severe such as near misses, harsh braking, slipping etc. The driving performance can alternatively, or additionally, be presented in real-time by means of a display function in the ego vehicle 100.

By making the calculated mean values available to insurance companies, personalized insurance fees can be set, and by making the calculated mean values available to traffic planners, knowledge about the positions Pos₁, Pos₂ related to those time windows 301, 303 where the calculated mean value P_{cm1}, P_{cm3} exceeds a mean threshold value Pₘₜ can help re-organizing, replanning and/or re-building certain roads and/or traffic installations where a crash is more likely to occur due to the determined severity of the near-crash situations in view of the motion data and calculated mean values collected from a plurality of drivers over time.

For more short-term problems such as an icy road or a broken traffic light, warning messages may be issued, for example via radio such that other drivers are helped to be cautious on such road segments to avoid the occurrence of a crash and other dangerous events. Furthermore, the need of repair of for example a broken traffic light and the need for counter-acting ice on the road can be identified.

According to some aspects, each time window 301, 302, 303, 304 has a length t₀-t₁; t₁-t₂; t₂-t₃ between 1ms and 10s, and more preferably between 1s and 5s. Other examples of time window lengths are of course conceivable. The length of one or more time windows may for example be set in dependence of date, time of day, temperature etc. Examples of other parameters that may influence the length of one or more time windows may for example be driver age and vehicle type. The time windows in a series of time windows 301, 302, 303, 304 may have the same length or mutually different lengths. One series of time windows may comprise two or more sub-series of time windows. In Figure 3 the time windows 301, 302, 303, 303 are shown to be non-overlapping, but some time windows, or all time windows may be more or less overlapping.

According to some aspects, the motion sensor arrangement 102 comprises at least one of an accelerometer 103, a gyroscope 104 and a yaw detector 105 that is adapted to detect yaw angle ω and speed of yaw angle change Δω/Δt. These are of course only examples; many other types of sensors are conceivable such as for example brake value detector.

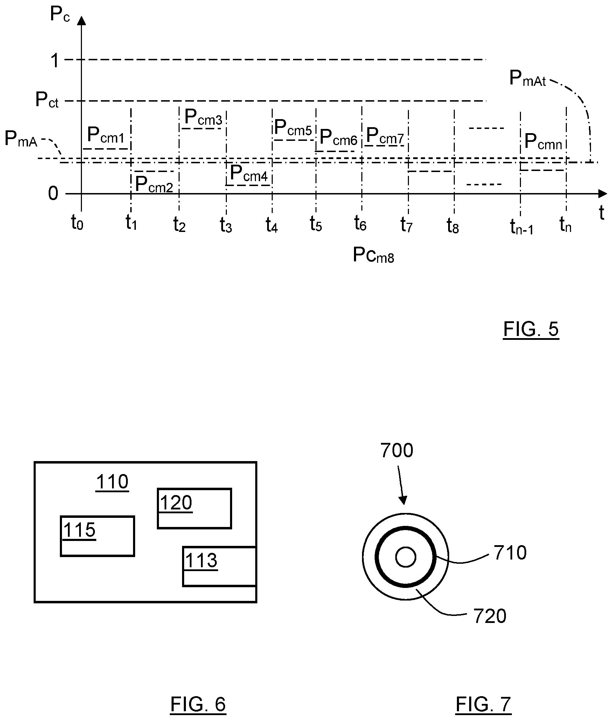

According to some aspects, with reference also to Figure 5 that for example can be regarded as a general expansion of Figure 4B, the control unit arrangement 110 is adapted to adjust the crash threshold P_{ct} in dependence of a plurality of calculated mean values P_{cm1}, P_{cm2}, P_{cm3}, P_{cm4}, P_{cm5}, P_{cm6}, P_{cm7}, P_{cm8}, P_{cmn}. As illustrated in Figure 5, there may me many calculated mean values P_{cm1}, P_{cm2}, P_{cm3}, P_{cm4}, P_{cm5}, P_{cm6}, P_{cm7}, P_{cm8}, P_{cmn} that are calculated for time windows in the same ways as the three mean values P_{cm1}, P_{cm2}, P_{cm3} in Figure 4B. The three mean values P_{cm1}, P_{cm2}, P_{cm3} in Figure 4B may correspond to the first three mean values P_{cm1}, P_{cm2}, P_{cm3} in Figure 5, but this is not necessary.

The mean values P_{cm1}, P_{cm2}, P_{cm3}, P_{cm4}, P_{cm5}, P_{cm6}, P_{cm7}, P_{cm8}, P_{cmn} may have been calculated from collected motion data that has been acquired during a certain time, for example hours, days and/or weeks. This means that the crash threshold P_{ct} can be adjusted to better conform with the real conditions.

The crash threshold P_{ct} may be adjusted continuously during the acquisition of the motion data and calculation of the mean values P_{cm1}, P_{cm2}, P_{cm3}, P_{cm4}, P_{cm5}, P_{cm6}, P_{cm7}, P_{cm8}, P_{cmn}, or when certain conditions are met such as at a predetermined time. Figure 4B also illustrates a plurality of calculated mean values P_{cm1}, P_{cm2}, P_{cm3} that correspond to the time windows of Figure 3, while Figure 5 is to be regarded as more general, illustrating n mean values corresponding to n time windows.

By adjusting the crash threshold P_{ct}, the limit for unexpected deployment of safety measures such as airbags and automatic braking can be avoided in case of false positives. For example, together with GPS data, the crash threshold P_{ct} can be adjusted to a more restrictive value if the driver is travelling on a small road or off-road where more bumps and breaking can be expected. On the other hand, the crash threshold P_{ct} can be adjusted to be more sensitive if deemed necessary, such that safety measures are deployed at a real crash event.

According to some aspects, as shown in Figure 5, the control unit arrangement 110 is adapted to issue an alert to a driver when an aggregated mean value P_{mA} of a plurality of calculated mean values P_{cm1}, P_{cm2}, P_{cm3}, P_{cm4}, P_{cm5}, P_{cm6}, P_{cm7}, P_{cm8}, P_{cmn} exceeds an aggregated threshold P_{mAt}.

This means that as soon as the aggregated mean value P_{mA} exceeds aggregated threshold P_{mAt}, the alert is issued, such that when the severity of near-crash occasions exceeds a limit, the driver is alerted. This is advantageous since the driver may not be sufficiently aware of the present conditions and should be more alert etc. such that a real crash is avoided.

According to some aspects, this is a real time feature where the aggregated mean value P_{mA} changes over time in an accumulative manner as more and more calculated mean values Pₘᵢ (i=1...n) become available. According to some aspects, when the ego vehicle 100 comes to a stop, the aggregated mean value P_{mA} will start to automatically decrease because of the reduction in crash probability. According to some aspects, the aggregated mean value P_{mA} is zeroed when the vehicle is stopped, or after the elapse of a certain time. Depending on how probabilities are calculated, instead of being zeroed however after stop, the aggregated mean value P_{mA} will start to gradually drop and start approaching a "negligible" value when the vehicle is stopped.

The aggregated mean value P_{mA} can be calculated in many ways, for example as an arithmetic mean value. According to some aspects, the control unit arrangement 110 is adapted to calculate the aggregated mean value P_{mA} as a weighted moving average where corresponding weights can linear, exponential or manually assigned etc. For example, for a real-time case, a weight of 1.0 is applied to the most recent window and a weight of 0.0 is applied to all other/previous windows when computing the aggregated mean value. Thie means that only the latest rolling time window is considered for calculation of the aggregated mean value P_{mA}.

According to some aspects, the issued alert is at least one of a visual alert, an auditory alert, and a haptic alert. In other words, the driver can be alerted in many different ways, ensuring that the driver is made aware of that an alert condition exists.

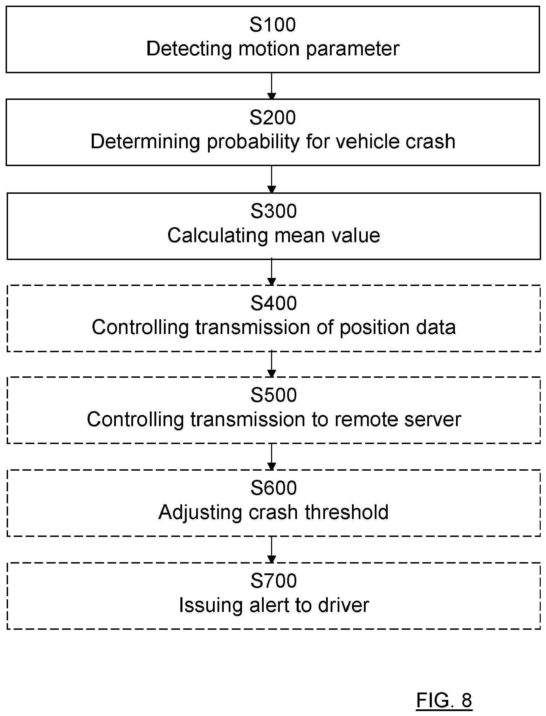

With reference to Figure 8, the present disclosure relates to a method in a vehicle safety system 101 adapted to be mounted in an ego vehicle 100. The method comprises detecting S100 at least one vehicle motion parameter ω, a, v, forming motion data, and determining S200 the probability P_{c} for a vehicle crash to occur within a certain upcoming time span Δt by means of collected motion data from the motion sensor arrangement 102. The method further comprises calculating S300 a mean value P_{cm}; P_{cm1}, P_{cm2}, P_{cm3} of those determined probabilities that fall below a certain crash threshold P_{ct}, below which crash threshold P_{ct} a vehicle crash is determined not to occur within said upcoming time span Δt, during a motion data collection time span t_{A}-t_{B}; t₀-t₁; t₁-t₂; t₂-t₃ where motion data is collected from the motion sensor arrangement 102.

According to some aspects, the motion data collection time span t_{A}-t_{B} runs during the safety system's travel path 200 in an ego vehicle 100 from a first position A to a second position B.

According to some aspects, the motion data collection time span t₀-t₁; t₁-t₂; t₂-t₃ runs in a predetermined time window 301, 302, 303, 304, where the motion data collection runs in a plurality of consecutive time windows 301, 302, 303, 304, where the mean value P_{cm1}, P_{cm2}, P_{cm3} is calculated for each time windows 301, 302, 303, 304.

According to some aspects, the method comprises controlling S400 transmission 241 of data identifying positions Pos₁, Pos₂ related to those time windows 301, 303 where the calculated mean value P_{cm1}, P_{cm3} exceeds a mean threshold value Pₘₜ.

According to some aspects, each time window 301, 302, 303, 304 has a length t₀-t₁; t₁-t₂; t₂-t₃ between 1ms and 10s, and more preferably between 1s and 5s.

According to some aspects, the method comprises controlling S500 transmission 241 of the calculated mean values P_{cm}; P_{cm1}, P_{cm2}, P_{cm3}; P_{cm1}, P_{cm2}, P_{cm3}, P_{cm4}, P_{cm5}, P_{cm6}, P_{cm7}, P_{cm8}, P_{cmn} to a remote server 243.

According to some aspects, the method comprises adjusting S600 the crash threshold P_{ct} in dependence of a plurality of calculated mean values P_{cm1}, P_{cm2}, P_{cm3}, P_{cm1}, P_{cm2}, P_{cm3}, P_{cm4}, P_{cm5}, P_{cm6}, P_{cm7}, P_{cm8}, P_{cmn}.

According to some aspects, the method comprises issuing S700 an alert to a driver when an aggregated mean value P_{mA} of a plurality of calculated mean values P_{cm1}, P_{cm2}, P_{cm3}, P_{cm4}, P_{cm5}, P_{cm6}, P_{cm7}, P_{cm8}, P_{cmn} exceeds an aggregated threshold P_{mAt}.

In Figure 6 it is schematically illustrated, in terms of a number of functional units, the components of the control unit arrangement 110 according to embodiments of the discussions herein. Processing circuitry 115 is provided using any combination of one or more of a suitable central processing unit CPU, multiprocessor, microcontroller, digital signal processor DSP, etc., capable of executing software instructions stored in a computer program product, e.g. in the form of a storage medium 120. The processing circuitry 115 may further be provided as at least one application specific integrated circuit ASIC, or field programmable gate array FPGA. The processing circuitry 115 thus comprises a plurality of digital logic components.

Particularly, the processing circuitry 115 is configured to cause the control unit arrangement 110 to perform a set of operations, or steps to control the operation of the safety system 101 that for example includes, but not being limited to, controlling the motion sensor arrangement 102, determining the probability for a vehicle crash to occur within a certain upcoming time span Δt by means of collected motion data from the motion sensor arrangement and to calculate the mean value.

For example, the storage medium 120 may store the set of operations, and the processing circuitry 115 may be configured to retrieve the set of operations from the storage medium 120 to cause the control unit arrangement 110 to perform the set of operations. The set of operations may be provided as a set of executable instructions. Thus, the processing circuitry 115 is thereby arranged to execute methods as herein disclosed.

The storage medium 120 may also comprise persistent storage, which, for example, can be any single one or combination of magnetic memory, optical memory, solid state memory or even remotely mounted memory.

According to some aspects, the control unit arrangement 110 further comprises an interface 113 for communications with at least one external device. As such the interface 113 may comprise one or more transmitters and receivers, comprising analogue and digital components and a suitable number of ports for wireline communication. The interface 113 can be adapted for communication with other devices, such as a remote server 243, a personal computer or a smartphone. Examples of such wireless communication devices are Bluetooth^{®}, WiFi^{®} (IEEE802.11b), Global System Mobile (GSM) and LTE (Long Term Evolution), to name a few. This means that, according to some aspects, other units such as the remote server 243 are adapted to partly execute the methods as disclosed herein.

Figure 7 shows a computer program product 700 comprising computer executable instructions 710, such as computer program code 710, stored on media 720 to execute any of the methods disclosed herein.

The control unit arrangement 110 can be arranged to communicate 241 with a cellular communication system 240, for example via the interface 113. This communication system may, e.g., be a third generation partnership program (3GPP) defined access network like the fourth generation (4G) or the fifth generation (5G) access networks. The access network may provide access to remote networks and other resources such as, e.g., the Internet 242. In this manner, the control unit arrangement 110 can control transmission 241 of the calculated mean values P_{cm}; P_{cm1}, P_{cm2}, P_{cm3}; P_{cm1}, P_{cm2}, P_{cm3}, P_{cm4}, P_{cm5}, P_{cm6}, P_{cm7}, P_{cm8}, P_{cmn} to the remote server 243 via the cellular communication system 240.

It is also appreciated that some processing functions may be performed by resources in a remote network 242, such as the remote server 243. Thus, functions of control unit arrangement 110 may be performed remotely on, e.g., the remote server 243.The remote server 243 may then form or be a part of the control unit arrangement 110, 243.

The present disclosure relates to a safety system 101 as described above. The present disclosure also relates to a vehicle 100 comprising the vehicle safety system 101 as described herein, for example the ego vehicle 100 described above.

The present disclosure is not limited to the examples described above, but may vary freely within the scope of the appended claims. For example, while the ego vehicle is exemplified by a car in the examples described and illustrated in the drawings, the ego vehicle may be any type of vehicle such as for example a scooter, a motorcycle, and a bicycle.

By means of the present disclosure, additional value-added safety functionalities are provided that enhance rider/driver safety, apart from crash detection, while leveraging already existing hardware and associated software typically used in a crash detection system.

Minimal computation efforts are required to provide the safety functionalities, where the mean value P_{cm}; P_{cm1}, P_{cm2}, P_{cm3} can be computed both offline and online in real-time in view of the respective application.

The mean value P_{cm}; P_{cm1}, P_{cm2}, P_{cm3} and other calculations according to the present disclosure can be computed by one or more analytical algorithms, or by using a machine-learning (ML) based algorithm, for example in a neural network. Such an algorithm can be comprised in a crash detection algorithm that is adapted to predicting whether a crash is about to happen, is happening or has happened.

## Claims

1. A vehicle safety system (101) adapted to be mounted in an ego vehicle (100) and comprising at least one motion sensor arrangement (102), adapted to detect at least one vehicle motion parameter (ω, a, v), forming motion data, and a control unit arrangement (110) adapted to determine the probability (P_{c}, 400) for a vehicle crash to occur within a certain upcoming time span (Δt) by means of collected motion data from the motion sensor arrangement (102), **characterized in that** the control unit arrangement (110) is adapted to calculate a mean value (P_{cm}; P_{cm1}, P_{cm2}, P_{cm3}) of those determined probabilities (P_{c}, 400) that fall below a certain crash threshold (P_{ct}) during a motion data collection time span (t_{A}-t_{B}; t₀-t₁; t₁-t₂; t₂-t₃) where the control unit arrangement (110) is adapted to collect motion data from the motion sensor arrangement (102), below which crash threshold (P_{ct}) a vehicle crash is determined not to occur within said upcoming time span (Δt).

2. The vehicle safety system (40) according to claim 1, wherein the motion data collection time span (t_{A}-t_{B}) runs during the safety system's travel path (200) in an ego vehicle (100) from a first position (A) to a second position (B).

3. The vehicle safety system (40) according to any one of the claims 1 or 2, wherein the motion data collection time span (t₀-t₁; t₁-t₂; t₂-t₃) runs in a predetermined time window (301, 302, 303, 304) .

4. The vehicle safety system (40) according to claim 3, wherein the motion data collection runs in a plurality of consecutive time windows (301, 302, 303, 304), where the mean value (P_{cm1}, P_{cm2}, P_{cm3}) is calculated for each time windows (301, 302, 303, 304) .

5. The vehicle safety system (40) according to claim 4, wherein the control unit arrangement (110) is adapted to control transmission (241) of data identifying positions (Pos₁, Pos₂) related to those time windows (301, 303) where the calculated mean value (P_{cm1}, P_{cm3}) exceeds a mean threshold value (Pₘₜ).

6. The vehicle safety system (40) according to any one of the claims 3-5, wherein each time window (301, 302, 303, 304) has a length (t₀-t₁; t₁-t₂; t₂-t₃) between 1ms and 10s, and more preferably between 1s and 5s.

7. The vehicle safety system (40) according to any one of the previous claims, wherein the control unit arrangement (110) is adapted to control transmission (241) of the calculated mean values (P_{cm}; P_{cm1}, P_{cm2}, P_{cm3}; P_{cm1}, P_{cm2}, P_{cm3}, P_{cm4}, P_{cm5}, P_{cm6}, P_{cm7}, P_{cm8}, P_{cmn}) to a remote server (243).

8. The vehicle safety system (40) according to any one of the previous claims, wherein the motion sensor arrangement (102) comprises at least one of an accelerometer (103), a gyroscope (104) and a yaw detector (105) that is adapted to detect yaw angle (ω) and speed of yaw angle (ω) change.

9. The vehicle safety system (40) according to any one of the previous claims, wherein the control unit arrangement (110) is adapted to adjust the crash threshold (P_{ct}) in dependence of a plurality of calculated mean values (P_{cm1}, P_{cm2}, P_{cm3}; P_{cm1}, P_{cm2}, P_{cm3} , P_{cm4}, P_{cm5}, P_{cm6}, P_{cm7}, P_{cm8}, P_{cmn}).

10. The vehicle safety system (40) according to any one of the previous claims, wherein the control unit arrangement (110) is adapted to issue an alert to a driver when an aggregated mean value (P_{mA}) of a plurality of calculated mean values (P_{cm1}, P_{cm2}, P_{cm3}, P_{cm4}, P_{cm5}, P_{cm6}, P_{cm7}, P_{cm8}, P_{cmn}) exceeds an aggregated threshold (P_{mAt}).

11. The vehicle safety system (40) according to claim 10, wherein the issued alert as at least one of a visual alert, an auditory alert, and a haptic alert.

12. A method in a vehicle safety system (101) adapted to be mounted in an ego vehicle (100), where the method comprises:
detecting (S100) at least one vehicle motion parameter (ω, a, v), forming motion data,
determining (S200) the probability (P_{c}) for a vehicle crash to occur within a certain upcoming time span (Δt) by means of collected motion data from the motion sensor arrangement (102), **characterized in that** the method further comprises:
calculating (S300) a mean value (P_{cm}; P_{cm1}, P_{cm2}, P_{cm3}) of those determined probabilities that fall below a certain crash threshold (P_{ct}), below which crash threshold (P_{ct}) a vehicle crash is determined not to occur within said upcoming time span (Δt), during a motion data collection time span (t_{A}-t_{B}; t₀-t₁; t₁-t₂; t₂-t₃) where motion data is collected from the motion sensor arrangement (102).

13. The method according to claim 12, wherein the motion data collection time span (t_{A}-t_{B}) runs during the safety system's travel path (200) in an ego vehicle (100) from a first position (A) to a second position (B).

14. The method according to any one of the claims 12 or 13, wherein the motion data collection time span (t₀-t₁; t₁-t₂; t₂-t₃) runs in a predetermined time window (301, 302, 303, 304), where the motion data collection runs in a plurality of consecutive time windows (301, 302, 303, 304), where the mean value (P_{cm1}, P_{cm2}, P_{cm3}) is calculated for each time windows (301, 302, 303, 304).

15. A vehicle (100) comprising the vehicle safety system according to any one of the claims 1-11.
